Europäisches Patentamt

European Patent Office

Office européen des brevets

(19)

(11) Veröffentlichungsnummer: **0 158 967**
**A2**

# (12) EUROPÄISCHE PATENTANMELDUNG

(21) Anmeldenummer: **85104331.5**

(22) Anmeldetag: **10.04.85**

(51) Int. Cl.⁴: **G 02 B 6/28**

(30) Priorität: **12.04.84 DE 3413703**

(43) Veröffentlichungstag der Anmeldung:
**23.10.85 Patentblatt 85/43**

(84) Benannte Vertragsstaaten:
**AT CH DE FR GB IT LI NL**

(71) Anmelder: **Standard Elektrik Lorenz Aktiengesellschaft**
**Lorenzstrasse 10**
**D-7000 Stuttgart 40(DE)**

(72) Erfinder: **Kaiser, Manfred**
**Zeppelinstrasse 2**
**D-7150 Hemmingen(DE)**

(74) Vertreter: **Schmidt, Werner, Dipl.-Phys. et al,**
**c/o Standard Elektrik Lorenz AG Patent- und**
**Lizenzwesen Kurze Strasse 8 Postfach 300 929**
**D-7000 Stuttgart 30(DE)**

(54) Optischer Multiplexer/Demultiplexer.

(57) Der Multiplexer/Demultiplexer besteht aus mehreren miteinander verkitteten Elementen (105, 106, 107, 108) aus einem optisch transparenten. Material, auf die Filterschichten (101, 102, 103, 104) so aufgebracht sind, daß wellenlängenselektive Strahlteiler gebildet werden.

FIG.1

EP 0 158 967 A2

Croydon Printing Company Ltd.

M.Kaiser-9


Optischer Multiplexer/Demultiplexer


Die Erfindung geht aus von einem optischen Multiplexer/
Demultiplexer mit einem Strahlteiler. Solche Multiplexer/
Demultiplexer sind an sich bekannt. Sie eignen sich dazu,
zwei Signale, die sich durch unterschiedliche Wellenlängen
ihrer Trägerschwingungen unterscheiden, zu einem Signal
zu kombinieren bzw. ein solches Signal in seine zwei Anteile aufzuteilen.

Aufgabe der Erfindung ist es, einen Multiplexer/Demultiplexer für mehr als zwei Wellenlängen anzugeben.

Die Lösung dieser Aufgabe erfolgt mit den im Anspruch 1
angegebenen Mitteln. Vorteilhafte Weiterbildungen sind
den Ansprüchen 2 bis 7 zu entnehmen. Im Anspruch 8 ist
ein Verfahren zur Herstellung eines solchen Multiplexers/
Demultiplexers angegeben. Die Ansprüche 9 bis 11 geben
Weiterbildungen dieses Verfahrens an.

Der neue Multiplexer/Demultiplexer ist sowohl für Monomode-Wellenausbreitungen als auch für Multimode-Wellenausbreitungen geeignet. Er ermöglicht das Multiplexen/
Demultiplexen einer großer Anzahl Teilstrahlen (Kanäle)
die voneinander unterschiedliche Wellenlängen aufweisen.
An den Multiplexer/Demultiplexer sind sowohl Lichtwellenleiter als auch Sende- oder Empfangselemente anschließbar.

Bei der Weiterbildung gemäß Anspruch 7 wird die Wellenlängentrennung noch dadurch verbessert, daß sich die Polarisationsrichtung des Teilstrahls, der an dem betroffenen
Strahlteiler angekoppelt werden soll, deutlich von den
Polarisationsrichtungen der anderen Teilstrahlen unter-

M.Kaiser-9

scheidet, und zwar dergestalt, daß der Strahlteiler für diese Polarisationsrichtung die höchste Reflektivität aufweist.

Die Herstellung des neuen Multiplexers/Demultiplexers ist einfach. Die einzelnen Arbeitsgänge bei der Herstellung können für mehrere Bauelemente gleichzeitig durchgeführt werden. Falls überhaupt eine Funktionsprüfung der Multiplexer/Demultiplexer nach der Herstellung notwendig ist, wird es in der Regel ausreichend sein, ein einzelnes Bauelement eines Fertigungsloses zu vermessen.

Die Erfindung wird anhand der Zeichnungen beispielsweise näher erläutert. Es zeigt:

Fig. 1       einen Längsschnitt durch einen Multiplexer/Demultiplexer und den Strahlengang des Lichts, und

Fig. 2a      Skizzen zur Erläuterung des Herstellungsverbis 2d       fahrens.

Der neue Multiplexer/Demultiplexer ist ein reziprokes Bauelement, d. h. er kann ohne Veränderung des konstruktiven Aufbaus sowohl als Multiplexer als auch als Demultiplexer eingesetzt werden, d. h. sowohl zum Vereinigen als auch zum Trennen von optischen Teilstrahlen (Kanälen), die jeweils eine andere Wellenlänge aufweisen . Die Anschlüsse (auch Tore genannt) des Multiplexers/Demultiplexers sind je nach Betriebsart Eingänge oder Ausgänge. Für die Funktionsbeschreibung wird die Betriebsart "Demultiplexer" gewählt. Zur Vereinfachung ist in der nachfolgenden Beschreibung nur noch vom Demultiplexer die Rede.

M.Kaiser-9

Beim Demultiplexen wird ein aus mehreren Teilstrahlen bestehender Lichtstrahl in seine Teilstrahlen aufgeteilt. Jeder Teilstrahl weist eine bestimmte Wellenlänge oder einen bestimmten Wellenlängenbereich auf. Nachfolgend wird zur Vereinfachung für beide Fälle nur noch von einer (bestimmten) Wellenlänge gesprochen. Wird der neue Multiplexer/Demultiplexer bei der optischen Übertragungstechnik eingesetzt, dann entspricht ein Teilstrahl einem Übertragungskanal.

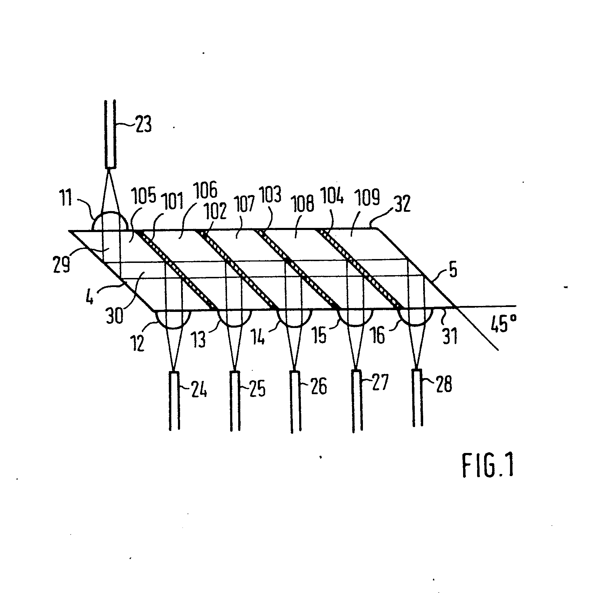

Der neue Demultiplexer wird anhand der Fig. 1 erläutert. Ein in einem Lichtwellenleiter 23 ankommender Lichtstrahl setzt sich aus mehreren Teilstrahlen zusammen, wobei jeder Teilstrahl eine unterschiedliche Wellenlänge aufweist. Aufgabe des Demultiplexers ist es, diesem Lichtstrahl in seine verschiedenen Teilstrahlen aufzuteilen. Das aus dem Lichtwellenleiter 23 austretende Licht wird einer Linse 11 zugeführt und diese erzeugt einen parallelen Lichtstrahl. Dieser Lichtstrahl wird in den Demultiplexer eingekoppelt.

Der Demuliplexer hat die Form eines Parallelepipeds. In der Fig. 1 ist ein Längsschnitt durch das Parallelepiped dargestellt und zwar in einer solchen Richtung, daß der Längsschnitt die Form eines Parallelogramms hat. Der Demultiplexer setzt sich aus mehreren Elementen 105, 106, 107, 108 und 109 zusammen. Diese Elemente (mit Ausnahme des in Richtung des Hauptstrahlengangs letzten Elements 109) sind auf ihrer dem Strahleneintritt abgewandten Seite mit einer Filterschicht 101, 102, 103 und 104 belegt. Diese Filterschichten sind so aufgebaut, daß sie für einen Teilstrahl einer bestimmten Wellenlänge einen hohen Reflexionsfaktor haben, für andere Wellenlängen jedoch transparent sind. Im Längsschnitt haben die einzelnen Elemente

0158967

M.Kaiser-9

die Form eines Parallelogramms und die jeweils langen Seiten der Parallelogramme sind gegenüber der Hauptstrahlrichtung, die weiter unten noch näher erläutert wird, geneigt. Dadurch wirken die einzelnen Elemente (mit Ausnahme des letzten Elements 109) als wellenlängenselektive Strahlteiler. Die Strahlteiler reflektieren jeweils den Teil des Lichtstrahls (Teilstrahl), der die Wellenlänge hat, auf die der betroffene Strahlteiler abgestimmt ist.

Die halbkugelförmige Linse 11 ist auf der oberen Seite 32 des Demultiplexers angeordnet. Sie macht, wie bereits erwähnt, den aus dem Lichtwellenleiter 23 austretenden Lichtstrahl zu einem parallelen Lichtstrahl, der in den Demultiplexer eintritt und zwar senkrecht zu der Oberfläche 32, und der (29) nach seinem Eintritt in den Demultiplexer um 90° umgelenkt wird und zwar an der linken Seite 4 (linkes Element 105) des Demultiplexers. Dies geschieht entweder durch Totalreflexion oder durch eine auf die Fläche 4 aufgebrachte Spiegelschicht. Nach seiner Umlenkung breitet sich der Lichtstrahl 30 in einer Richtung aus, die als Hauptstrahlrichtung bezeichnet wird. Der Lichtstrahl trifft nacheinander auf die einzelnen wellenlängenselektiven Strahlteiler auf. Die Strahlteiler sind um 45° gegenüber der Hauptstrahlrichtung geneigt. Am ersten Strahlteiler wird der Teil (Teilstrahl) des Lichtstrahls reflektiert, der die Wellenlänge aufweist, auf die der erste Strahlteiler 101 abgestimmt ist. Dieser Teilstrahl wird um 90° in Richtung auf die der ersten Seite 32 gegenüberliegende andere Seite 31 des Demultiplexers abgelenkt. Er tritt auf dieser Seite 31 aus dem Demultiplexer aus, wird von einer halbkugelförmigen Linse 12 fokusiert und in einen Lichtwellenleiter 24 eingekoppelt. Entsprechendes geschieht für die Teilstrahlen des verbleibenden Lichtstrahls, (der jetzt den Teilstrahl mit der er-

M.Kaiser-9

sten Wellenlänge nicht mehr enthält) an den anderen Strahlteilern. An jedem der Strahlteiler wird jeweils ein Teilstrahl reflektiert und diese gelangen über Linsen 13, 14,
15, 16 zu weiteren Lichtwellenleitern 25, 26, 27, 28.

Die Anzahl der Strahlteiler ist um die Zahl eins geringer
als die Anzahl der Teilstrahlen, in die der auf den Demultiplexer auftreffende Lichtstrahl aufgeteilt wird. Nach dem
Passieren des letzten Strahlteilers 104 weist der Lichtstrahl nämlich nur noch einen Teilstrahl mit einer bestimmten Wellenlänge auf, da die übrigen Teilstrahlen bereits durch die übrigen Strahlteiler in Richtung der Seite
31 des Demultiplexers abgelenkt wurden. Deshalb reicht es
aus, den letzten Teilstrahl lediglich um 90° abzulenken,
was an der rechten Seite 5 des Demultiplexers geschieht.
Dieser letzte Teilstrahl gelangt dann ebenfalls über eine
halbkugelförmige Linse 16 auf den Lichtwellenleiter 28.

Der Multiplexer/Demultiplexer wurde hier in seiner Verwendung als Demultiplexer beschrieben, da der einfallende
Lichtstrahl, der über den Lichtwellenleiter 23 der Einrichtung zugeführt wird, in seine einzelnen Teilstrahlen aufgeteilt wird. Beim Betrieb als Multiplexer werden der Einrichtung über die Lichtwellenleiter 24, 25, 26, 27 und 28
mehrere Teilstrahlen zugeführt. Diese Teilstrahlen werden
an den einzelnen Strahlteilern 101, 102, 103 und 104 und an
der rechten Seite 5 der Einrichtung um 90° abgelenkt und somit in der Hauptstrahlrichtung einander überlagert. Der
Lichtstrahl, der an der linken Seite 4 des Multiplexers austritt, enthält bereits alle Teilstrahlen und wird an dieser
linken Seite 4 um 90° zu der halbkugelförmigen Linse 11 abgelenkt und gelangt über diese zu dem Lichtwellenleiter 23.

M.Kaiser-9

Bei dem Ausführungsbeispiel wird davon ausgegangen, daß die einzelnen Elemente und somit auch die einzelnen Strahlteiler um 45° gegenüber der Hauptstrahlrichtung geneigt sind. Dies ist jedoch nicht erforderlich, sondern es sind auch andere Neigungen möglich. Es muß dann lediglich dafür Sorge getragen werden, daß die einzelnen von den Strahlteilern reflektierten Teilstrahlen nach dem Verlassen des Demultiplexers in geeigneter Weise in die einzelnen Lichtwellenleiter eingekoppelt werden. Es ist weiterhin auch nicht notwendig, daß die einzelnen Strahlteiler zueinander parallel angeordnet sind. Eine parallele Anordnung ermöglicht jedoch eine besonders einfache Herstellung des neuen Multiplexers/Demultiplexers.

Bei der obigen Beschreibung wurde auf die Polarisation kein Bezug genommen. Die Polarisation kann jedoch in vorteilhafter Weise dazu ausgenutzt werden, die Trennung der Teilstrahlen zu verbessern. Dies gilt insbesondere für Teilstrahlern mit einander benachbarten Wellenlängen.

Die einzeln Elemente 105, 106, 107, 108 und 109 bestehen aus einem optisch aktiven Material. Es ist bekannt, daß ein solches Material die Polarisationsrichtung eines Lichtstrahls dreht und zwar u. a. auch abhängig von seiner Wellenlänge (siehe z. B. Lehrbuch Physik von Gerthsen, 13. Auflage, Springer-Verlag, Berlin 1977, Seiten 397 und 398). Die Dicke eines Elements wird in Abhängigkeit von der Wellenlänge des auszukoppelnden Teilstrahls so gewählt, daß die Polarisationsrichtung dieses Teilstrahls auf dem Weg zu dem Strahlteiler, der diesen Teilstrahl auskoppeln soll, so gedreht wird, daß für diesen Teilstrahl an dem betroffenen Strahlteiler eine größere, durch die Polarisationsrichtung bedingte Reflektivität als für die anderen Teilstrahlen vorhanden ist. Ent-

M.Kaiser-9

sprechendes gilt für die anderen Teilstrahlen auf ihren Wegen zu den weiteren Strahlteilern. Hierbei muß jeweils der insgesamt zurückgelegte Weg, d. h. der Weg vom Eintritt in den Demultiplexer bis zum betroffenen Strahlteiler, berücksichtigt werden.

Der Demultiplexer arbeitet insbesondere dann besonders wirkungsvoll, wenn alle auf ihn auftreffenden Teilstrahlen zirkular polarisiert sind.

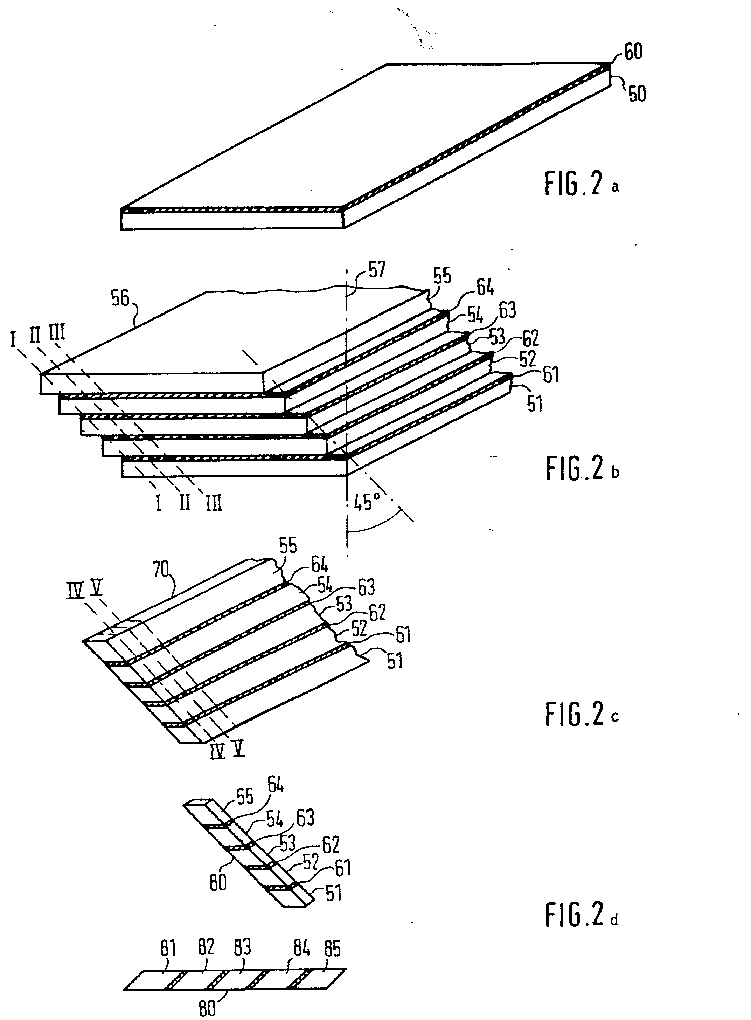

Ein besonders vorteilhaftes Herstellungsverfahren wird nachfolgend anhand der Fig. 2 erläutert.

Im ersten Arbeitsgang wird ein Plättchen 50 aus einem optisch durchlässigen Material mit einer Filterschicht 60 beschichtet, was beispielsweise durch Aufdampfen erfolgen kann. Dieser Vorgang wird für mehrere Plättchen durchgeführt, und zwar so, daß jedes Plättchen mit einer wellenlängenselektiven Schicht bedampft wird und die Wellenlänge für jedes Plättchen unterschiedlich ist. Danach werden die einzelnen beschichteten Plättchen 51, 52, 53, 54 und 55 übereinander gestapelt und miteinander verkittet. Hierbei braucht das oberste Plättchen 55 nicht mit einer Filterschicht versehen zu ein, da ein Teil der Oberseite dieses Plättchens 55 im fertigen Zustand des Multiplexers/Demultiplexers die in der Fig. 1 rechte Seite 5 der Einrichtung darstellt, an der eine wellenlängenunabhängige Totalreflexion erfolgt. Es ist natürlich auch möglich, dieses Plättchen mit einer Spiegelschicht für die Wellenlänge des letzten Teilstrahls zu versehen. In der Fig. 2b sind die Schichten der Plättchen mit den Bezugszeichen 61, 62, 63 und 64 versehen. Bei dem Ausführungsbeispiel sind die einzelnen beschichteten Plättchen so übereinander gestapelt,

M.Kaiser-9

daß sich in einem Querschnitt ein Parallelogramm ergibt. Die Gerade, die die Kanten der einzelnen Plättchen miteinander verbindet, ist gegen die Senkrechten 57 auf den Plättchen um einen Winkel von 45° geneigt. Dieser Neigungswinkel ist gleich dem Winkel, um den beim fertigen Multiplexer/Demultiplexer die Strahlteiler gegenüber der Hauptstrahlrichtung geneigt sein sollen. Von diesem Stapel werden mehrere Scheibchen abgetrennt. Die Trennflächen sind bestimmt durch eine Gerade, die parallel ist zu der Geraden, die die Kanten der einzelnen Plättchen miteinander verbindet, und durch eine Längsseite 56 der Plättchen. In der Fig. 2b sind drei Trennlinien I-I, II-II und III-III eingezeichnet. Dadurch, daß man die Plättchen mit der Neigung übereinander stapelt, in deren Richtung später die Abtrennung der einzelnen Scheibchen erfolgt, wird der Abfall gering gehalten. In der Fig. 2c ist ein einzelnes Scheibchen 17 dargestellt. Es hat die Form eines Parallelepipeds und setzt sich aus den von den einzelnen Plättchen abgeschnittenen Teilen zusammen. In der Fig. 2c sind die Teile der Plättchen mit ihren Beschichtungen, die von den gemäß Fig. 2b übereinander gestapelten Plättchen abgeschnitten worden sind, mit denselben Bezugszeichen wie die Plättchen der Fig. 2b bezeichnet. Das Material, mit dem die Plättchen miteinander verkittet sind, ist so gewählt, daß es sich optisch nicht störend bemerkbar macht und deshalb sind die Verkittungsstellen auch nicht im einzelnen dargestellt. Von diesen Scheibchen 70 wiederum werden mehrere Stücke abgetrennt. Dies geschieht in einer Richtung, die senkrecht zu den einzelnen dielektrischen Schichten 64, 63, 62, 61 ist. In der Fig. 2c sind zwei solcher Trennlinien eingezeichnet, nämlich die Trennlinien IV-IV und V-V.

Die einzelnen abgetrennten Stückchen sind die Multiplexer/Demultiplexer 80. Im oberen Teil der Fig. 2d ist ein solcher

M.Kaiser-9

Multiplexer/Demultiplexer in der Weise dargestellt wie er von dem Scheibchen 70 in der Fig. 2d abgeschnitten wird. Im unteren Teil der Fig. 2d ist ein einzelner Multiplexer/ Demultiplexer im Längsschnitt dargestellt, der dem Längsschnitt bei der Darstellung der Fig. 1 entspricht. Der Multiplexer/Demultiplexer setzt sich aus einzelnen Elementen 81, 82, 83, 84, 85 zusammen, wobei die Elemente bis auf das letzte Element 85 jeweils aus einem optisch durchlässigen Material (Plättchen 50, Fig. 2a) und einer darauf befindlichen Filterschicht (60, Fig. 2a) besteht. Die Elemente 81 bis 85 entsprechen den Elementen 105 bis 109 in der Fig. 1.

Vor dem Abtrennen der einzelnen Stückchen aus einem Scheibchen 70 werden die großen Oberflächen der Scheibchen 70 geschliffen und poliert.

Es ist ohne weiteres möglich, die Größe der einzelnen Plättchen und den Plättchenstapel so zu wählen, daß man aus einem Plättchenstapel ca. 100 Multiplexer/Demultiplexer erhält. Würden die Multiplexer/Demultiplexer einzeln hergestellt, dann müßten jeweils, verglichen mit dem beschriebenen Herstellungsverfahren, hundertmal mehr Filterschichten auf Substrate aufgebracht werden. Der Aufwand beim Aufdampfen der Schichten auf die Substrate wird somit wesentlich reduziert. Eine weitere wesentliche Reduzierung des Arbeitsaufwandes erhält man beim Schleifen und Polieren. Geht man davon aus, daß man aus einem Plättchenstapel 10 Scheibchen erhält und daß man aus jedem Scheibchen 10 Multiplexer/Demultiplexer gewinnt, dann erhält man eine Reduzierung des Aufwandes beim Polieren und Schleifen um den Faktor 10, denn hier werden gewissermaßen 10 Multiplexer/Demultiplexer in einem Arbeitsgang geschliffen und poliert. Stellt man die einzelnen Multiplexer/Demulti-

0158967

M.Kaiser-9

plexer einzeln her, und möchte man kontrollieren, ob die Schichten auch so aufgebracht sind, daß sie jeweils exakt für die gewünschte Wellenlänge selektiv sind, dann muß jeder einzelne Multiplexer/Demultiplexer geprüft werden. Bei diesem Herstellungsverfahren hingegen reicht es aus, nur einen Multiplexer/Demultiplexer zu prüfen, um sicherzustellen, daß die aufgedampften Schichten die vorgeschriebenen Werte haben, denn man kann davon ausgehen, daß die Aufdampfung auf einem Plättchen gleichmäßig erfolgt. Dadurch wird bei dem neuen Herstellungsverfahren auch der Prüfaufwand wesentlich reduziert.

STANDARD ELEKTRIK LORENZ

AKTIENGESELLSCHAFT

STUTTGART

M.Kaiser-9

Patentansprüche

1. Optischer Multiplexer/Demultiplexer mit einem Strahlteiler, der so ausgestaltet ist, das er Licht mit einer bestimmten Wellenlänge in eine von der Einfallsrichtung unterschiedliche Richtung reflektiert und das restliche Licht
nahezu unabgelenkt durchläßt, d a d u r c h   g e k e n n -
z e i c h n e t ,   daß in dem Bauelement, das den Multiplexer/
Demultiplexer bildet, in der Hauptstrahlrichtung (30) mindestens ein weiterer Strahlteiler (102, 103, 104)vorgesehen ist,
und daß alle Strahlteiler auf eine andere Wellenlänge abgestimmt sind.

2. Optischer Multiplexer/Demultiplexer nach Anspruch 1,
dadurch gekennzeichnet,   daß das Bauelement aus mehreren
gleichartig miteinander verbundenen optisch transparenten
Elementen (105, 106, 107, 108, 109) besteht, bei denen zumindest eine Oberfläche der meisten der sich in der Hauptstrahlrichtung befindlichen Elemente so ausgestaltet ist, daß sie
als wellenlängenselektiver Strahlteiler wirkt.

3. Optischer Multiplexer/Demultiplexer nach Anspruch 2,
dadurch gekennzeichnet,   daß auf jeweils eine Oberfläche
eines Elements eine wellenlängenselektive  Einfach-oder
Mehrfach-Schicht (101, 102, 103, 104) aufgebracht ist.

ZT/P1-Sm/Ni                                                    - 2 -
30.01.1984

0158967

M.Kaiser-9

4. Optischer Multiplexer/Demultiplexer nach Anspruch 3, dadurch gekennzeichnet, daß die untereinander geometrisch gleichen Elemente um einen bestimmten Winkel gegen die Hauptstrahlrichtung geneigt sind, und daß die Begrenzungsflächen (31, 32) des aus den Elementen bestehende Bauelements ebene Flächen sind, die zueinander parallel sind.

5. Optischer Multiplexer/Demultiplexer nach Anspruch 4, dadurch gekennzeichnet, daß an den Stellen der Oberfläche des Bauelements, an denen das zumindest näherungsweise monochromatische Licht in das Bauelement ein- oder austritt, optische Bandpässe vorgesehen sind.

6. Optischer Multiplexer/Demultiplexer nach Anspruch 4 oder 5, dadurch gekennzeichnet, daß an den Lichteintritts- und Austrittsstellen in den ebenen Begrenzungsflächen des Bauelements zumindest angenähert halbkugelförmige Linsen (12, 13, 14, 15, 16) vorhanden sind.

7. Optischer Multiplexer/Demultiplexer nach einem der Ansprüche 2 bis 6, dadurch gekennzeichnet, daß die einzelnen optisch transparenten Elemente aus einem optisch aktiven Material bestehen, das die Polarisationsebene des durch sie hindurchzutretenden Lichts drehte und zwar in an sich bekannter Weise abhängig von der Wellenlänge des Lichtstrahls, und daß die Dicken der Elemente in der Ausbreitungsrichtung des Lichts so gewählt sind, daß die Polarisationsrichtung des Teilstrahls, der ausgekoppelt werden soll, so gedreht wird, daß er an dem Strahlteiler nicht nur wegen seiner Wellenlänge sondern auch wegen seines Polarisationszustandes stärker als die anderen Teilstrahlen reflektiert wird.

M.Kaiser-9

8.    Verfahren zur Herstellung eines Multiplexers/Demultiplexers nach Anspruch 3 oder 7, dadurch gekennzeichnet, daß mit Filterschichten verschiedene Plättchen (50)
aus einem optisch transparenten Material übereinandergestapelt und miteinander verkittet werden (Fig. 2b), daß
von diesem Stapel Scheibchen abgetrennt (I-I, II-II, III-
III) werden und zwar so, daß die Trennflächen den Stapel
mit den Plättchen parallel zu einer Plättchenseite (56)
und geneigt zur Senkrechten (57) auf einem Plättchen
schneidet, und daß von diesen Scheibchen (70) Stücke (80),
die die Multiplexer/Demultiplexer sind, abgetrennt werden.

9.    Verfahren nach Anspruch 8, dadurch gekennzeichnet,
daß die übereinandergestapelten Plättchen jeweils um einen
konstanten Wert gegeneinander versetzt sind, sodaß ein schiefer Stapel gebildet wird.

10.    Verfahren nach Anspruch 8 oder 9, dadurch gekennzeichnet, daß die Ober- und Unterseiten der Scheibchen (70) vor
ihrer weiteren Verarbeitung geschliffen und poliert werden.

11.    Verfahren nach Anspruch 8, 9 oder 10, dadurch gekennzeichnet, daß die Plättchen so aufeinandergestapelt werden,
daß die Gerade, die die Plättchenenden verbindet, parallel
zu der Trennrichtung (I-I) ist.

0158967

FIG.1

M. Kaiser-9
7. 6. 84

0158967

60
50

**FIG.2** a

57    55
56    64
      54  63
I II III   53  62
           52  61
              51

45°

I  II  III

**FIG.2** b

70    55
      64
IV V  54  63
      53  62
      52  61
         51

IV V

**FIG.2** c

55  64
54  63
53  62
80  52  61
    51

**FIG.2** d

81  82  83    84  85

80

M. Kaiser - 9
7. 6. 84